Europäisches Patentamt

European Patent Office

Office européen des brevets

(11) Veröffentlichungsnummer: **0 445 331 A1**

## (12) EUROPÄISCHE PATENTANMELDUNG

(21) Anmeldenummer: 90104381.0

(22) Anmeldetag: 07.03.90

(51) Int. Cl.⁵: **F16M 11/06**, G06F 1/16

(43) Veröffentlichungstag der Anmeldung:
**11.09.91 Patentblatt 91/37**

(84) Benannte Vertragsstaaten:
**DE ES FR GB IT**

(71) Anmelder: **FIRST NATIONAL INVESTMENTS LTD.**
**Companies House, Tower Street**
**Ramsey, Isle of Man(GB)**

(72) Erfinder: **Gates, Jeffrey Lee**
**10210 Herb Road**
**Windsor , California(US)**

(74) Vertreter: **DIEHL GLAESER HILTL & PARTNER**
**Patentanwälte Flüggenstrasse 13**
**W-8000 München 19(DE)**

(54) **Schwenkarm für eine Tragplatte, insbesondere eine Monitortragplatte.**

(57) Angegeben wird ein dreidimensional verstellbarer Schwenkarm für eine Tragplatte, insbesondere für eine Monitortragplatte, mit einer Hauptstütze (1), einem daran in einer ersten Achse (8) verschwenkbaren ersten Teilarm (2) mit einem Gasfederelement, einer Zwischenstütze (3), an welcher der erste Teilarm (2) um eine zweite Achse (10) verschwenkbar befestigt ist, und einem zweiten Teilarm (4), der mit der Zwischenstütze (3) schwenkbar verbunden ist und die Tragplatte (5) trägt. Der Schwenkarm ist dadurch gekennzeichnet, daß das Gasfederelement aus zwei Gasfedern besteht, deren der Zwischenstütze (3) zugewandte Aufnahmepunkte oberhalb der Verbindungsebene der beiden Schwenkachsen (8, 10) des ersten Teilarms (2) angeordnet sind.

Fig.1

EP 0 445 331 A1

Die Erfindung betrifft einen dreidimensional verstellbaren Schwenkarm für eine Tragplatte, insbesondere für eine Monitortragplatte.

Derartige Schwenkarme sind bekannt und werden bereits vielfach an Arbeitsplätzen benutzt, die mit Bildschirmen, Tastaturen und gegebenenfalls sonstigen Computereinrichtungen ausgestattet sind. Auf der Tragplatte eines solchen Schwenkarms wird üblicher Weise ein Monitor abgestellt. Häufig ist an dieser Tragplatte auch noch eine Ablagevorrichtung für die Tastatur vorgesehen. Ein solcher Schwenkarm mit Tragplatte hat den Vorteil, daß er vorübergehend oder dauerhaft an einem Arbeitstisch befestigt werden kann und die Arbeitsfläche dieses Tisches durch die auf der Tragplatte abgestellten Geräte, wie Monitor, Tastatur oder Telefon nicht eingeschränkt wird. Das auf der Tragplatte abgestellte Gerät kann bei Bedarf durch den Benutzer leicht herangeholt und bei Nichtbenutzung so weit weggeschwenkt werden, daß eine räumliche Beeinträchtigung nicht mehr gegeben ist.

Es sind dreidimensional verstellbare Schwenkarme für eine Tragplatte, insbesondere für eine Monitortragplatte, in verschiedenen Konstruktionen bekannt. Die wesentlichen Merkmale einer speziellen Ausführungsform eines solchen üblichen Schwenkarms sind folgende:

a. Eine Hauptstütze, an der ein erster Teilarm mit seinem einen Ende um eine erste horizontale Achse verschwenkbar befestigt ist;

b. ein an dem ersten Teilarm angeordnetes Gasfederelement, dessen Aufnahmepunkte sich im Bereich der Enden des ersten Teilarms befinden;

c. eine Zwischenstütze, an der das andere Ende des ersten Teilarms um eine zweite horizontale Achse bezüglich der Zwischenstütze verschwenkbar befestigt ist; und

d. ein zweiter Teilarm, der mit seinem einen Ende um eine erste vertikale Achse verschwenkbar an der Zwischenstütze befestigt ist und an seinem anderen Ende die Tragplatte trägt.

Ein derart ausgebildeter Schwenkarm weist jedoch noch Nachteile auf. Zwar wird seine Vertikalbewegung durch die mit dem ersten Teilarm zusammenwirkende Gasfeder unterstützt bzw. gebremst, so daß das auf der Tragplatte abgestellte Gerät leichter und sicherer in die gewünschte Position geschwenkt werden kann als dies ohne die Gasfeder möglich wäre. Es hat sich aber gezeigt, daß hierfür eine relativ groß dimensionierte Gasfeder erforderlich ist, die außerdem noch mit einer hohen Vorspannung in dem ersten Tragarm aufweisen muß. Dies erhöht nicht nur die Herstellungskosten für die Gasfeder und die die Vorspannung aufnehmenden Teile des Schwenkarms, sondern beinhaltet auch ein hohes Sicherheitsrisiko, weil Gasfedern mit einem hohen Innendruck platzen können.

Ein weiterer Nachteil dieses bekannten Schwenkarmtyps liegt darin, daß das Drehlager, welches zum Beispiel an einer Tischplatte befestigt ist und die erwähnte Hauptstütze des Schwenkarms trägt, häufig eine zu geringe Bremswirkung beim horizontalen Verschwenken des Schwenkarms ausübt, so daß sich dieser aus der Reichweite des Benutzers zu weit entfernt. Wird aber zu diesem Zweck dieses Lager aus einem Kunststoff mit einem entsprechen größeren Reibungskoeffizienten hergestellt, leiert dieses Lagermaterial im Laufe der Zeit aus, so daß sich die Hauptstütze des Schwenkarms entsprechend dem Gewicht auf der Tragplatte aus der Senkrechten neigt und seine Stabilität verliert. Das gleiche gilt für das Drehlager, das sich zwischen der obengenannten Zwischenstütze und dem zweiten Teilarm befindet.

Der Erfindung liegt daher die Aufgabe zugrunde, die oben beschriebene Ausführungsform eines bekannten Schwenkarms dahingehend zu verbessern, daß der mit der Gasfeder verbundene Herstellungsaufwand und das Sicherheitsrisiko vermindert werden sowie die Stabilität der hauptsächlich senkrecht belasteten Schwenkarmlager auch nach langem Gebrauch noch groß ist.

Diese Aufgabe löst die Erfindung durch einen dreidimensional verstellbaren Schwenkarm mit den eingangs genannten Merkmalen a bis d, der dadurch gekennzeichnet ist, daß das Gasfederelement aus mindestens zwei parallel wirkenden Gasfedern besteht, deren der Zwischenstütze zugewandte Aufnahmepunkte oberhalb der Verbindungsebene zwischen der ersten und der zweiten horizontalen Schwenkachse des ersten Teilarms angeordnet sind.

Dadurch wird erreicht, daß für die Herstellung derartiger Schwenkarme wesentlich kleiner dimensionierte Gasfedern mit einem deutlich geringeren Innendruck und mit einer wesentlich kleineren Vorspannung eingesetzt werden können. Dies spart nicht nur Material, sondern vermindert auch ganz erheblich das Risiko des Platzens der Gasfedern. Auch die Herstellungskosten für die Gasfedern werden dadurch sehr stark gesenkt. Durch die höhere Stückzahl an Gasfedern pro Schwenkarm im Vergleich zu dem bekannten Schwenkarm werden die Herstellungskosten pro Gasfeder so weit vermindert, daß der Kostenaufwand für zwei erfindungsgemäß eingesetzte, geringer dimensionierte Gasfedern kleiner ist als für die in dem bekannten Schwenkarm verwendete einzige und stärkere Gasfeder.

Der erfindungsgemäße Schwenkarm kommt auch mit einer geringeren Federkraft der Gasfeder aus, weil diese Feder bezüglich der Verbindungsebene zwischen der ersten und der zweiten horizontalen Schwenkachse geneigt ist. Dagegen liegt die Gasfeder bei dem bekannten Schwenkarm im wesentlichen in dieser Verbindungsebene.

Gemäß einer bevorzugten Ausführungsform des erfindungsgemäßen Schwenkarms sind auch die der Hauptstütze zugewandten Aufnahmepunkte der Gasfedern unterhalb der Verbindungsebene zwischen der ersten und der zweiten horizontalen Schwenkachse des ersten Teilarms angeordnet. Dadurch befindet sich die Wirkungsrichtung der Gasfedern in einem noch steileren Winkel bezüglich dieser beiden Schwenkachsen, und die nötige Federkraft der Gasfedern wird weiter reduziert.

Noch mehr bevorzugt ist eine Ausführungsform, bei welcher die der Hauptstütze zugewandten Aufnahmepunkte der Gasfedern im wesentlichen senkrecht unter der ersten horizontalen Schwenkachse des ersten Teilarms und die der Zwischenstütze zugewandten Aufnahmepunkte der Gasfedern im wesentlichen senkrecht über der zweiten horizontalen Schwenkachse des ersten Teilarms angeordnet sind.

Es hat sich als zweckmäßig herausgestellt, wenn der Schwenkarm einen Justiermechanismus zum Einstellen der Vorspannung der Gasfedern aufweist. Damit kann die Stärke der Beeinflussung der Vertikalbewegung des ersten Teilarms durch die Gasfedern variiert und z.B. dem auf der Monitortragplatte lastenden Gewicht angepaßt werden.

Es ist sehr günstig, wenn der erste Teilarm zwei halbschalenartige, in beiden Seitenansichten des Teilarms einstückig ausgebildete Abdeckblenden aufweist. Diese bieten gegenüber den Abdeckblenden des bekannten Schwenkarms eine höhere Sicherheit, weil bei der Vertikalbewegung des ersten Teilarms an dessen Seitenflächen keine scherenartige Bewegung von Blendenteilen auftritt.

Es ist von Vorteil, wenn die Abdeckblenden zur Aufnahme von Elektrokabeln Ausnehmungen an den Blendenenden und innere Trägerelemente aufweisen. Dadurch können zum Beispiel Monitor und Tastaturkabel, die beim Verschwenken des Schwenkarms mitgeführt werden müssen, teilweise unsichtbar zusammengefaßt werden und stören nicht bei der Bewegung des Schwenkarms.

Vorzugsweise ist die Hauptstütze auf einem Axialdrucklager drehbar gelagert, daß im wesentlichen aus einer Ringscheibe und einem Kugellager im inneren Freiraum der Ringscheibe besteht. Dabei ist es besonders bevorzugt, daß die Dicke der Ringscheibe so bemessen ist, daß sie den Durchmesser der Kugeln des Kugellagers geringfügig übersteigt. Die aus einem entsprechenden bekannten Material bestehende Ringscheibe sorgt dafür, daß bei der Drehbewegung der Hauptstütze in dem Axialdrucklager eine gewünschte Bremswirkung erzielt wird, damit der Schwenkarm bei einem leichten seitlichen Stoß nicht zu weit ausschwenkt. Wenn nach einiger Benutzungszeit die Ringscheibe im Bereich ihrer stärksten Belastung unvermeidlich etwas an Dicke verliert und dadurch das Axialdrucklager auszuleiern droht sowie die Hauptstütze sich zu neigen beginnt, werden die Kräfte, welche normalerweise diese Wirkungen weiter verstärken würden, durch das Kugellager aufgefangen. Da aber auch dann noch die Gleitfläche der Ringscheibe ihre Funktion beibehält, bleibt der gewünschte Bremseffekt erhalten, ohne daß eine weitere Neigung der Hauptstütze eintritt.

Der gleiche Vorteil wird auch an einer anderen Stelle des Schwenkarms erzielt, wenn nämlich das zwischen der Zwischenstütze und dem zweiten Teilarm gebildete Gelenk ein Axialdrucklager dieser vorgenannten Art aufweist.

Die Erfindung wird nachfolgend anhand einer in den Zeichnungen schematisch dargestellten Ausführungsform beispielhaft erläutert.

Es zeigen

Fig. 1 eine Seitenansicht des Schwenkarms mit Monitortragplatte und Tastaturablage;

Fig. 2 eine Explosionsdarstellung des Schwenkarms mit Monitortragplatte gemäß Fig. 1; und

Fig. 3 ein zusammengesetztes Axialdrucklager aus Fig. 2 in vergrößerter Darstellung.

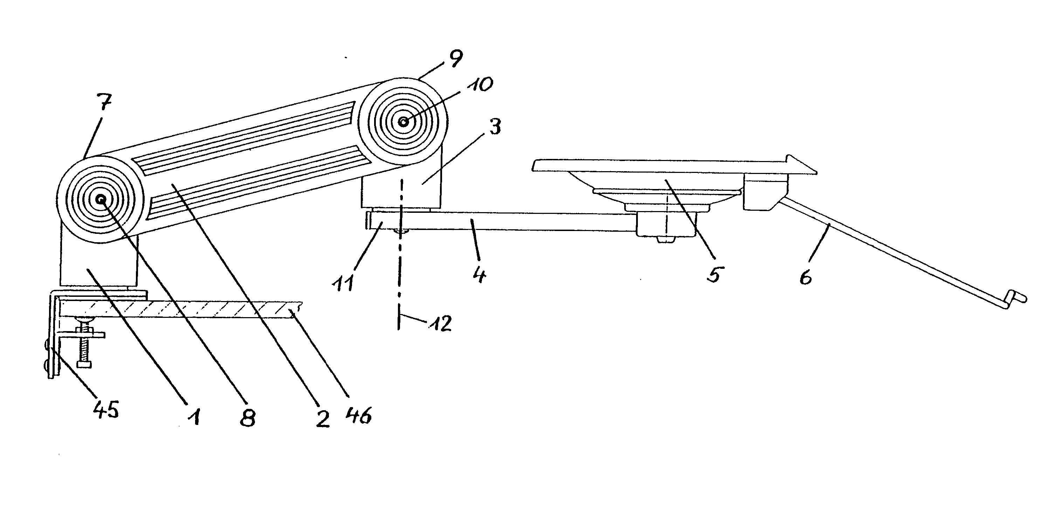

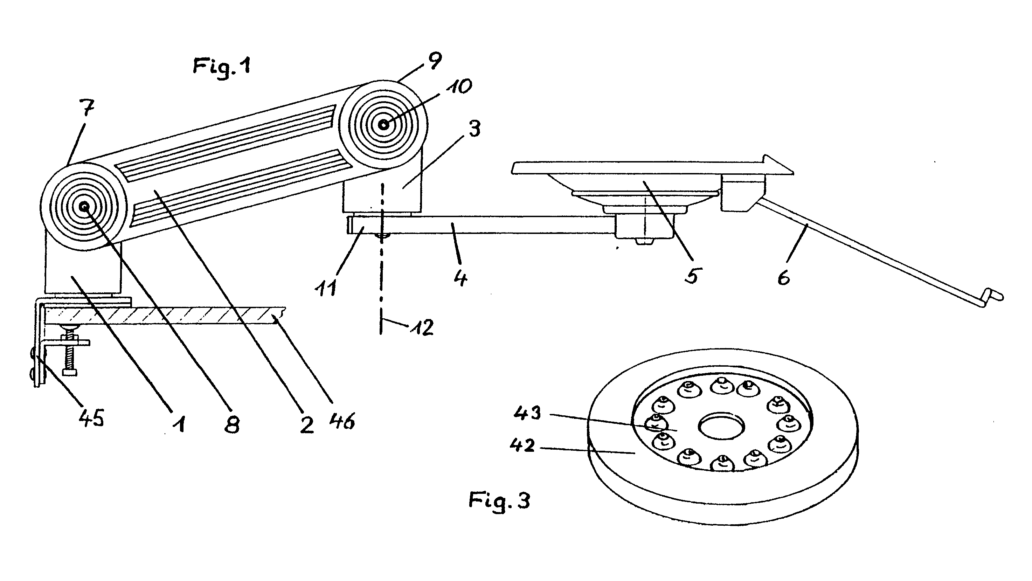

Gemäß Fig. 1 besteht der Schwenkarm in seinen äußeren Teilen im wesentlichen aus einer Hauptstütze 1, einem ersten Teilarm 2, einer Zwischenstütze 3 und einem zweiten Teilarm 4. An diesem ist eine Monitortragplatte 5 mit einer Tastaturablage 6 befestigt.

Der erste Teilarm 2 ist mit seinem einen Ende 7 um eine erste horizontale Achse 8 an der Hauptstütze 1 verschwenkbar befestigt. Das andere Ende 9 des ersten Teilarms 2 ist um eine zweite horizontale Achse 10 bezüglich der Zwischenstütze 3 verschwenkbar befestigt.

Der zweite Teilarm 4 ist mit seinem einen Ende 11 um eine vertikale Achse 12 an der Unterseite der Zwischenstütze 3 verschwenkbar befestigt.

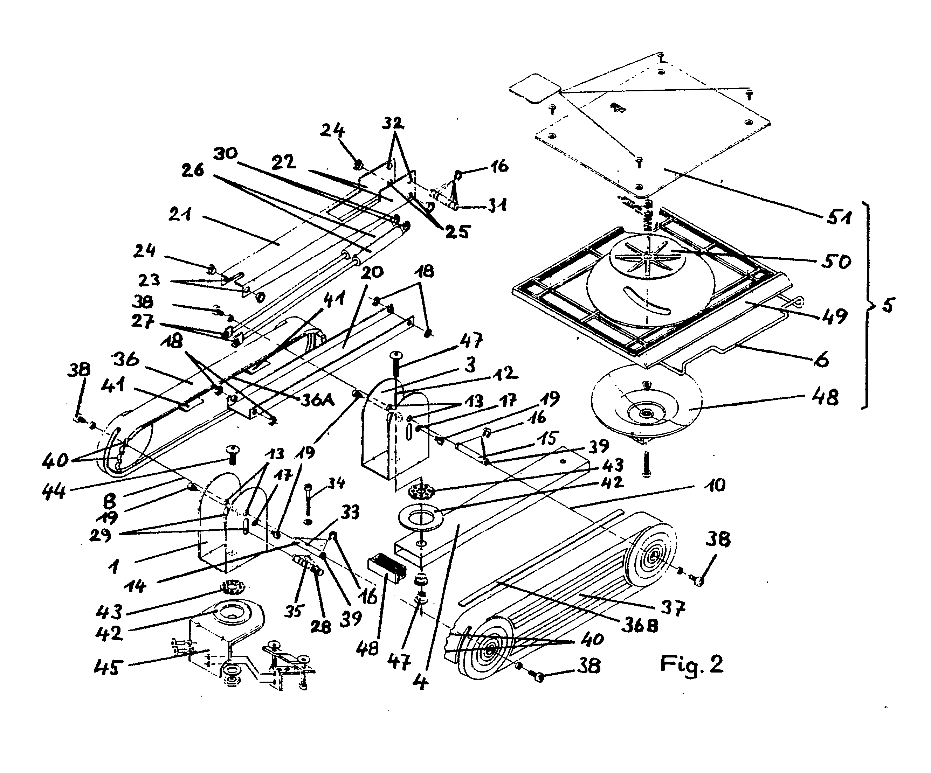

Gemäß Fig. 2 sind die Hauptstütze 1 und die Zwischenstütze 3 als nach oben offene U-Träger ausgebildet, deren Schenkelenden etwa halbkreisförmig gestaltet sind. In Bohrungen 13 der Hauptstütze 1 und der Zwischenstütze 3 sind Wellen 14, 15 gelagert, die der ersten und der zweiten horizontalen Schwenkachse 8, 10 des ersten Teilarms 2 entsprechen. Die Wellen 14, 15 sind durch Sicherungsringe 16 in den Bohrungen 13 gesichert.

Mittels Bohrungen 17, Gleitringen 18 und Schrauben 19 ist eine nach oben offene erste U-Profilschiene 20 mit der Hauptstütze 1 und der Zwischenstütze 3 jeweils drehbar verbunden.

Eine nach unten offene zweite U-Profilschiene 21 mit an einem Ende verlängerten Parallelschenkeln 22 ist einerseits mittels Bohrungen 23 und Lagerbuchsen 24 aus Metall (mit einer Innenbeschichtung aus Polytetrafluorethylen) auf der Welle 14 in der Hauptstütze 1, und andererseits mittels Bohrungen 25 (in den Parallelschenkeln 22) und gleichfalls Lagerbuchsen 24 auf der Welle 15 in der Zwischenstütze 3 jeweils drehbar gelagert.

Zwei parallele Gasfedern 26 sind mit ihren der Hauptstütze 1 zugewandten Aufnahmepunkten 27 auf einer Welle 28 drehbar gelagert, die in senkrechten Langlöchern 29 der Hauptstütze 1 beweglich angeordnet ist. Damit befinden sich diese Aufnahmepunkte 27 der Gasfedern 26 in der Hauptstütze 1 unterhalb der ersten horizontalen Schwenkachse 8 des ersten Teilarms 2.

Die der Zwischenstütze 3 zugewandten Aufnahmepunkte 30 der Gasfedern 26 sind auf einer Welle 31 drehbar gelagert, die in Bohrungen 32 in den Parallelschenkeln 22 der zweiten U-Profilschiene 21 angeordnet ist. Damit befinden sich im Bereich der Zwischenstütze 3 die Aufnahmepunkte 30 der Gasfedern 26 oberhalb der zweiten horizontalen Schwenkachse 10 des ersten Teilarms 2.

Die Wellen 28, 31 für die Aufnahmepunkte 27, 30 der Gasfedern 26 sind in den zugehörigen Bohrungen 29, 32 durch Sicherungsringe 16 gesichert. Entsprechendes gilt für die ösenartigen Aufnahmepunkte 27, 30 der Gasfedern 26 auf den Wellen 28, 31.

Die Welle 14 für die zweite U-Profilschiene 21 weist in ihrer Mitte eine senkrechte Radialbohrung auf. Durch diese ist eine Justierschraube 34 hindurchgeführt, die in ein entsprechendes Radialgewinde 35 in der darunter befindlichen Welle 28 eingreift. Dadurch kann in dem Langloch 29 der Abstand der Welle 28 von der Schwenkachse 8 des Teilarms 2 verändert werden. Eine solche Veränderung bedeutet auch eine Änderung des Abstandes zwischen den Aufnahmepunkten 27, 30 der Gasfedern 26. Damit wird ein vorteilhafter Justiermechanismus für den Neigungswinkel bzw. die Vorspannung der Gasfedern 26 im Teilarm 2 zur Verfügung gestellt.

Der erste Teilarm 2 weist zwei halbschalenartige, in beiden Seitenansichten dieses Teilarms einstückig ausgebildete, längliche Abdeckblenden 36, 37 auf. Diese sind jeweils in der ersten und in der zweiten horizontalen Schwenkachse 8, 10 mittels zweier Blendenschrauben 38 an den Wellen 14, 15 befestigt, wozu diese entsprechende Axialgewinde 39 aufweisen. Die Abdeckblenden 36, 37 sind an ihren abgerundeten Enden über einen Umfangsabschnitt ihrer Innenkanten mit mehreren, einander gegenüberliegenden, halbkreisähnlichen Ausnehmungen 40 versehen. Dadurch werden an den gegeneinander gesetzten Abdeckblenden 36, 37 etwa kreisförmige Öffnungen zur Durchführung von Elektrokabeln gebildet. Auf der Innenseite der Abdeckblende 36 ragen im gleichen Abstand von der Blendenoberkante zwei Stege vor, die als Trägerelemente 41 mit der oberen Wand der Abdeckblende 36 eine Art Kabelkanal für die Elektrokabel im Innern des Teilarms 2 bilden.

Zur Verstärkung und gegenseitigen Fixierung ist in der Oberkante jeder Abdeckblende 36, 37 ein Längsschlitz 36 A vorgesehen, in den ein Verstärkungsstreifen 36 B aus einem steifen Material eingelegt ist.

Die Hauptstütze 1 und die Zwischenstütze 3 sind jeweils auf einem Axialdrucklager drehbar gelagert, das im wesentlichen aus einer Ringscheibe 42 und einem Kugellager 43 im inneren Freiraum der Ringscheibe 42 besteht. In Fig. 3 ist das Lager in zusammengesetzter Form dargestellt. Die Dicke der Ringscheibe 42 übersteigt geringfügig den Durchmesser der Kugeln des Kugellagers 43.

Die Hauptstütze 1 ist mittels einer Schraube 44 über das Axialdrucklager 42, 43 mit einem Winkelstück 45 verbunden, das in üblicher Weise mit Klemmschrauben und sonstigen Mitteln zur Befestigung des Winkelstücks 45 an einer Tischplatte 46 (siehe Fig. 1) ausgerüstet ist.

Die Unterseite der Zwischenstütze 3 ist in der Achse 12 über ein Axialdrucklager 42, 43 durch Schraubenmittel 47 mit einem Ende 11 des zweiten Teilarms 4 drehbar verbunden. Letzterer ist als Vierkantrohr ausgebildet und an jenem Ende 11 mit einem Stopfen 48 verschlossen.

Am anderen Ende des zweiten Teilarms 4 ist die Monitortragplatte 5 festgeschraubt. Diese besteht im wesentlichen von unten nach oben aus einer runden Grundplatte 48, einer quadratischen Hauptplatte 49, einer runden Zwischenplatte 50 und einer quadratischen Abdeckplatte 51. An der Unterseite der Hauptplatte 49 ist ein seitlich herausziehbarer U-Bügel 6 befestigt, der in herausgezogenem Zustand (siehe Fig. 1) als Tastaturablage 6 dient. Der U-Bügel 6 ist nicht nur herausziehbar, sondern kann im herausgezogenen Zustand bei Bedarf auch zusätzlich abgesenkt werden, um dem Benutzer der darauf abgelegten Tastatur eine bequeme Arm- und Handhaltung zu ermöglichen.

Die einzelnen Teile der Monitortragplatte 5 sind in üblicher Weise derart ausgebildet und durch weitere Bauteile ergänzt, daß diese Platte um ihre Mittelachse gedreht und gegenüber der Horizontalen geneigt werden kann.

Bei der Benutzung des Schwenkarms werden bei einer Auf- bzw. Abwärtsbewegung des ersten Teilarms 2 die Gasfedern entsprechend verlängert bzw. verkürzt und beeinflussen dabei den hierzu nötigen Kraftaufwand in Abhängigkeit von ihrer eingestellten Vorspannung.

**Patentansprüche**

1. Dreidimensional verstellbarer Schwenkarm für eine Tragplatte, insbesondere eine Monitortragplatte,

   mit einer Hauptstütze (1), an der ein erster Teilarm (2) mit seinem einen Ende (7) um eine erste horizontale Achse (8) verschwenkbar befestigt ist,

   mit einem an dem ersten Teilarm (2) angeordneten Gasfederelement, dessen Aufnahmepunkte sich im Bereich der Enden (7, 9) des ersten Teilarms (2) befinden,

   mit einer Zwischenstütze (3), an der das andere Ende (9) des ersten Teilarms (2) um eine zweite horizontale Achse (10) bezüglich der Zwischenstütze (3) verschwenkbar befestigt ist, und

   mit einem zweiten Teilarm (4), der mit seinem einen Ende um eine vertikale Achse (12) verschwenkbar an der Zwischenstütze (3) befestigt ist und an seinem anderen Ende die Tragplatte (5) trägt,

   dadurch gekennzeichnet, daß

   das Gasfederelement aus mindestens zwei parallel wirkenden Gasfedern (26) besteht, deren der Zwischenstütze (3) zugewandte Aufnahmepunkte (30) oberhalb der Verbindungsebene der ersten und der zweiten horizontalen Schwenkachse (8, 10) des ersten Teilarms (2) angeordnet sind.

2. Schwenkarm nach Anspruch 1, dadurch gekennzeichnet, daß die der Hauptstütze (1) zugewandten Aufnahmepunkte (27) der Gasfedern (26) sich unterhalb der Verbindungsebene der ersten und der zweiten horizontalen Schwenkachse (8, 10) des ersten Teilarms (2) angeordnet sind.

3. Schwenkarm nach Anspruch 1 und 2, dadurch gekennzeichnet, daß die der Hauptstütze (1) zugewandten Aufnahmepunkte (27) der Gasfedern (26) im wesentlichen senkrecht unter der ersten horizontalen Schwenkachse (8) des ersten Teilarms (2) und die der Zwischenstütze (3) zugewandten Aufnahmepunkte (30) der Gasfedern (26) im wesentlichen senkrecht über der zweiten horizontalen Schwenkachse (10) des ersten Teilarms (2) angeordnet sind.

4. Schwenkarm nach einem der Ansprüche 1 bis 3, dadurch gekennzeichnet, daß er einen Justiermechanismus (34, 35) zum Einstellen der Vorspannung der Gasfedern (26) aufweist.

5. Schwenkarm nach einem der Ansprüche 1 bis 4, dadurch gekennzeichnet, daß der erste Teilarm (2) zwei halbschalenartige, in beiden Seitenansichten des Teilarms (2) einstückig ausgebildete Abdeckblenden (36, 37) aufweist.

6. Schwenkarm nach Anspruch 5, dadurch gekennzeichnet, daß die Abdeckblenden (36, 37) zur Aufnahme von Elektrokabeln Ausnehmungen (40) an den Blendenenden und innere Trägerelemente (41) aufweisen.

7. Schwenkarm nach einem der Ansprüche 1 bis 6, dadurch gekennzeichnet, daß die Hauptstütze (1) auf einem Axialdrucklager drehbar gelagert ist, das im wesentlichen aus einer Ringscheibe (42) und einem Kugellager (43) im inneren Freiraum der Ringscheibe (42) besteht.

8. Schwenkarm nach Anspruch 7, dadurch gekennzeichnet, daß die Dicke der Ringscheibe (42) so bemessen ist, daß sie den Durchmesser der Kugeln des Kugellagers (43) geringfügig übersteigt.

9. Schwenkarm nach einem der Ansprüche 1 bis 8, dadurch gekennzeichnet, daß das zwischen der Zwischenstütze (3) und dem zweiten Teilarm (4) gebildete Gelenk ein Axialdrucklager gemäß Anspruch 8 aufweist.

Fig.1

Fig.3

Fig. 2

# EUROPÄISCHER RECHERCHENBERICHT

**EP 90 10 4381**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 695 024 (HAVEN)<br>* Ganzes Dokument *<br>— — — | 1,2,3,4 | F 16 M 11/06<br>G 06 F 1/16 |
| Y | DE-A-1 491 073 (SIEMENS)<br>* Seite 5, Zeilen 11-19; Figuren 2,3 *<br>— — — | 1,2,3,4 | |
| A | GB-A-7 853 63 (AMALGAMATED DENTAL CO.)<br>* Seite 1, Zeile 86 - Seite 2, Zeile 5; Figuren 1-3 *<br>— — — | 5,6 | |
| A | US-A-3 160 379 (GARDELLA)<br>* Spalte 3, Zeilen 69-74; Figuren 5,5A *<br>— — — | 5 | |
| A | US-A-4 635 894 (SAMMONS)<br>* Spalte 3, Zeilen 38-56; Figur 3 *<br>— — — — — | 7 | |

**RECHERCHIERTE SACHGEBIETE (Int. Cl.5)**

F 16 M
G 06 F

Der vorliegende Recherchenbericht wurde für alle Patentansprüche erstellt

| Recherchenort | Abschlußdatum der Recherche | Prüfer |
|---|---|---|
| Den Haag | 25 Oktober 90 | BARON C. |